# EUROPÄISCHE PATENTSCHRIFT

(11) **EP 3 508 787 B1**
(45) Veröffentlichungstag und Bekanntmachung des Hinweises auf die Patenterteilung: **03.08.2022**
(21) Anmeldenummer: 18212830.6
(22) Anmeldetag: 17.12.2018
(51) Int. Cl.: F23J 15/02, F23D 3/40

(54) **BRENNKAMMERBAUGRUPPE**
COMBUSTION CHAMBER MODULE
ENSEMBLE CHAMBRE DE COMBUSTION

(30) Priorität: 08.01.2018 DE 102018100216
(43) Veröffentlichungstag der Anmeldung: 10.07.2019
(73) Patentinhaber: Eberspächer Climate Control Systems GmbH, 73730 Esslingen (DE)
(72) Erfinder: Humburg, Michael, 73035 Göppingen (DE); Pfister, Wolfgang, 73732 Esslingen (DE)
(74) Vertreter: Ruttensperger Lachnit Trossin Gomoll

(56) Entgegenhaltungen:
- EP-A2- 0 287 923
- WO-A1-2007/036974
- FR-A1- 2 928 846
- US-A1- 2012 116 589

## Beschreibung

Die vorliegende Erfindung betrifft eine Brennkammerbaugruppe gemäß dem Oberbegriff des Anspruchs 1, die in einem brennstoffbetriebenen Fahrzeugheizgerät dazu dient, durch Verbrennung eines Brennstoff/Luft-Gemisches Wärme transportierende Verbrennungsabgase bereitzustellen, um diese Wärme auf ein zu erwärmendes Medium, beispielsweise die in einen Fahrzeuginnenraum einzuleitende Luft oder ein in einem Wärmeträgermediumkreislauf zirkulierenden flüssiges Wärmeträgermedium, zu übertragen.

Aus der nachveröffentlichten deutschen Patentanmeldung DE 10 2016 117 408 ist eine Brennkammerbaugruppe bekannt, bei der durch das Vorsehen der Katalysatoranordnung im Abgasrückströmungsraum durch die an der Katalysatoranordnung ablaufende katalytische Reaktion insbesondere der CO-Anteil und der HC-Anteil in den Verbrennungsabgasen wesentlich verringert werden.

Aus der EP 0 287 923 A2 ist eine Brennkammerbaugruppe gemäß dem Oberbegriff des Anspruchs 1 bekannt.

Es ist die Aufgabe der vorliegenden Erfindung, eine derartige Brennkammerbaugruppe so weiterzubilden, dass eine im Abgasrückströmungsraum angeordnete Katalysatoranordnung eine erhöhte Effizienz in der Schadstoffverringerung bereitstellen kann.

Erfindungsgemäß wird diese Aufgabe gelöst durch eine Brennkammerbaugruppe für ein brennstoffbetriebenes Fahrzeugheizgerät gemäß Anspruch 1. Diese umfasst ein Brennkammergehäuse mit einer durch eine Umfangswandung begrenzten Brennkammer und einem in Richtung einer Gehäuselängsachse auf die Umfangswandung folgenden und einen in Richtung der Gehäuselängsachse offenen Abgasströmungsraum umgebenden Flammrohr, wobei zwischen dem Flammrohr und einem dieses umgebenden Gehäuse ein Abgasrückströmungsraum gebildet ist, wobei in einem ersten axialen Endbereich des Abgasrückströmungsraums der Abgasströmungsraum zum Abgasrückströmungsraum offen ist und im Abgasrückströmungsraum eine von im Abgasrückströmungsraum strömenden Verbrennungsabgasen durchströmbare Katalysatoranordnung vorgesehen ist.

Eine kompakte, gleichwohl einen effizienten Betrieb der Katalysatoranordnung gewährleistende Ausgestaltung wird dadurch erreicht, dass an dem Gehäuse in den Abgasrückströmungsraum vorstehende Wärmeübertragungsrippen vorgesehen sind, und dass die Katalysatoranordnung im Abgasrückströmungsraum auf die Wärmeübertragungsrippen folgend angeordnet ist.

Diese Brennkammerbaugruppe zeichnet sich dadurch aus, dass eine Heizeinrichtung zum Erwärmen der Katalysatoranordnung vorgesehen ist.

Durch das Vorsehen einer der Katalysatoranordnung zugeordneten Heizeinrichtung wird es möglich, die Katalysatoranordnung nicht nur im stationären Betrieb, also einem Zustand, in welchem im Wesentlichen alle Systemkomponenten der Brennkammerbaugruppe durch die diese durchströmenden Verbrennungsabgase auf Betriebstemperatur gebracht sind bzw. gehalten werden, effizient zu betreiben und damit den CO- bzw. den HC-Gehalt in den Verbrennungsabgasen bis nahe an die Nachweisgrenze zu reduzieren und auch die ansonsten beim Abschalten eines mit einer derartigen Brennkammerbaugruppe aufgebauten Fahrzeugheizgeräts auftretenden Abschalt-Spitzen im CO- und HC-Ausstoß wesentlich zu verringern. Vielmehr wird mit dem erfindungsgemäßen Aufbau die Möglichkeit geschaffen, die Katalysatoranordnung insbesondere auch bei niedrigen Umgebungstemperaturen bereits vor bzw. bei Betriebsbeginn zu erwärmen und auf eine Temperatur im Bereich oder über der Anspringtemperatur von beispielsweise etwa 200 °C zu bringen bzw. auf dieser Temperatur zu halten, bis mit einsetzender Verbrennung und dabei die Brennkammerbaugruppe und auch die Katalysatoranordnung durchströmenden Verbrennungsabgasen auch ohne fortgesetzte Erregung der Heizeinrichtung im Bereich der Katalysatoranordnung die für eine effiziente katalytische Reaktion erforderliche Temperatur gewährleistet ist.

Für einen sehr effizienten Betrieb der Heizeinrichtung wird vorgeschlagen, dass diese wenigstens bereichsweise in Wärmeübertragungskontakt mit der Katalysatoranordnung steht. Auf diese Art und Weise ist ein direkter Wärmeübertrag durch Wärmeleitung auf die Katalysatoranordnung gewährleistet, so dass Wärmeverluste auch weitestgehend ausgeschlossen werden können.

Um den in einem Heizgerät bzw. einer Brennkammerbaugruppe dafür verfügbaren Bauraum möglichst effizient zu nutzen, ist die Katalysatoranordnung die Gehäuselängsachse ringartig umgebend ausgebildet, und die Heizeinrichtung weist einen die Gehäuselängsachse ringartig umgebenden Heizbereich auf.

Eine kompakte, gleichwohl einen effizienten Betrieb der Katalysatoranordnung gewährleistende Ausgestaltung kann weiter dadurch erreicht werden, dass die Katalysatoranordnung in einem zweiten axialen Endbereich des Abgasrückströmungsraums angeordnet ist.

Um mit der Heizeinrichtung nicht nur die Katalysatoranordnung, sondern auch an diese unmittelbar anschließende Bereiche der Brennkammerbaugruppe vorwärmen zu können, ist der Heizbereich zwischen der Katalysatoranordnung und den Wärmeübertragungsrippen angeordnet und steht in Wärmeübertragungskontakt mit der Katalysatoranordnung und den Wärmeübertragungsrippen. Dabei kann die die Katalysatoranordnung in Richtung auf den ersten axialen Endbereich des Abgasrückströmungsraums zu bezüglich der Wärmeübertragungsrippen axial abgestützt sein.

Für eine definierte Positionierung der Katalysatoranordnung kann ferner dadurch gesorgt werden, dass die Katalysatoranordnung in Richtung von dem ersten axialen Endbereich weg bezüglich eines Brennkammergehäuseträgers axial abgestützt ist.

Um in einfacher Art und Weise einen thermischen Kontakt zwischen der Heizeinrichtung und der im Abgasrückströmungsraum positionierten Katalysatoranordnung erreichen zu können, wird vorgeschlagen, dass eine den Abgasrückströmungsraum gasdicht abschließende Dichtanordnung vorgesehen ist, und dass die Dichtanordnung eine Durchführungsaussparung für die Heizeinrichtung aufweist. Diese Dichtanordnung kann beispielsweise zwischen dem Brennkammergehäuseträger und dem Gehäuse angeordnet sein.

Die Heizeinrichtung umfasst vorzugsweise einen elektrisch erregbaren Heizleiter. Ein derartiger elektrisch erregbar Heizleiter bildet einerseits eine kompakte und effizient betreibbare Baugruppe, die andererseits auch in vielfältiger und leicht an bauliche Gegebenheiten anpassbarer Konfiguration in eine Brennkammerbaugruppe integriert werden kann.

Der Heizleiter kann beispielsweise ein Mantel-Heizleiter sein. In einem derartigen Mantel-Heizleiter kann der ein innen liegendes Heizelement umschließenden Mantel an das Heizelement elektrisch angekoppelt sein und somit einen Leiterbereich des Heizleiters bilden.

Die vorliegende Erfindung betrifft ferner ein mit einer erfindungsgemäß aufgebauten Brennkammerbaugruppe ausgestattetes Fahrzeugheizgerät.

Die Erfindung wird nachfolgend mit Bezug auf die beiliegenden Figuren detailliert beschrieben. Es zeigt:
- Fig. 1: in Längsschnitt eine Brennkammerbaugruppe für ein Fahrzeugheizgerät;
- Fig. 2: in Alleinstellung ein einen Teil einer Wärmetauscheranordnung bereitstellendes Gehäuse der Brennkammerbaugruppe der Fig. 1;
- Fig. 3: ein Brennkammergehäuse mit einem Flammrohr und einem Brennkammergehäuseträger;
- Fig. 4: eine Schnittdarstellung einer Katalysatoranordnung der Brennkammerbaugruppe der Fig. 1;

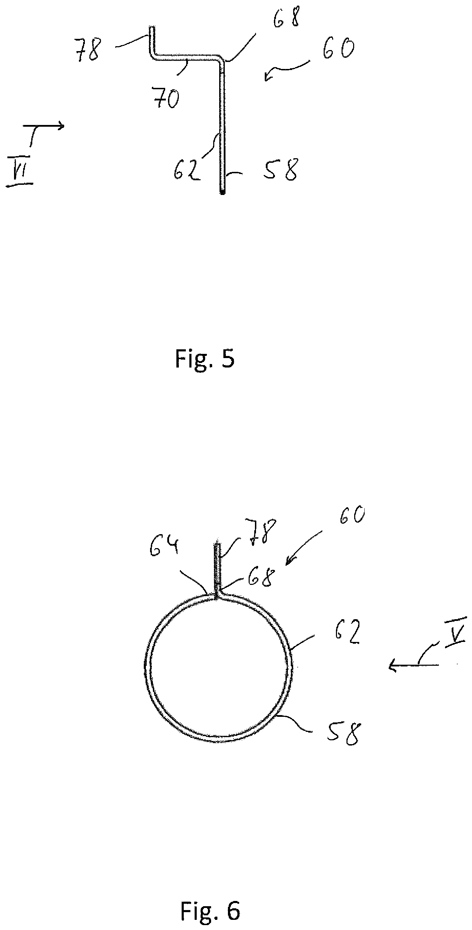

- Fig. 5: eine Heizeinrichtung der Brennkammerbaugruppe der Fig. 1, betrachtet in Blickrichtung V in Fig. 6;
- Fig. 6: die Heizeinrichtung der Fig. 5, betrachtet in Blickrichtung VI in Fig. 5;
- Fig. 7: eine mit zwei Dichtscheiben aufgebaute Dichtanordnung der Brennkammerbaugruppe der Fig. 1;
- Fig. 8: eine Dichtscheibe der in Fig. 7 dargestellten Dichtanordnung in Blickrichtung VIII.

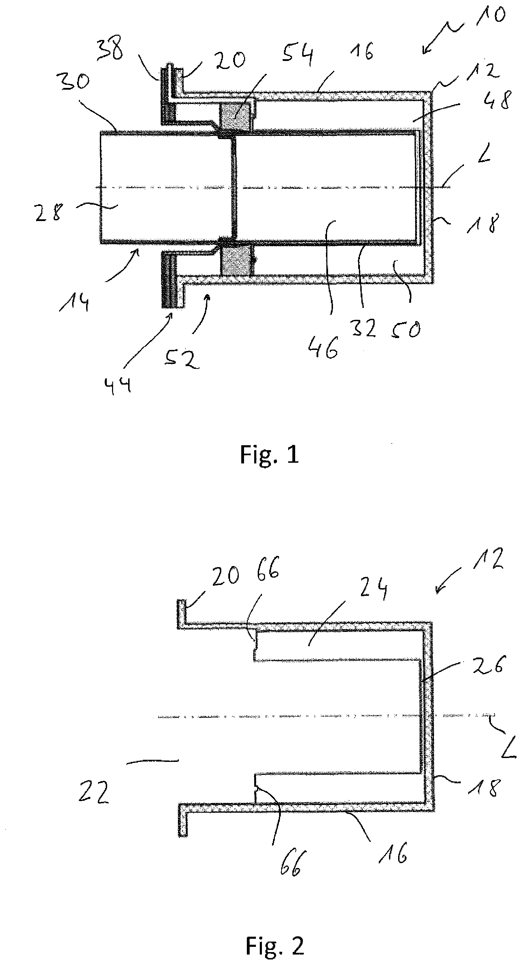

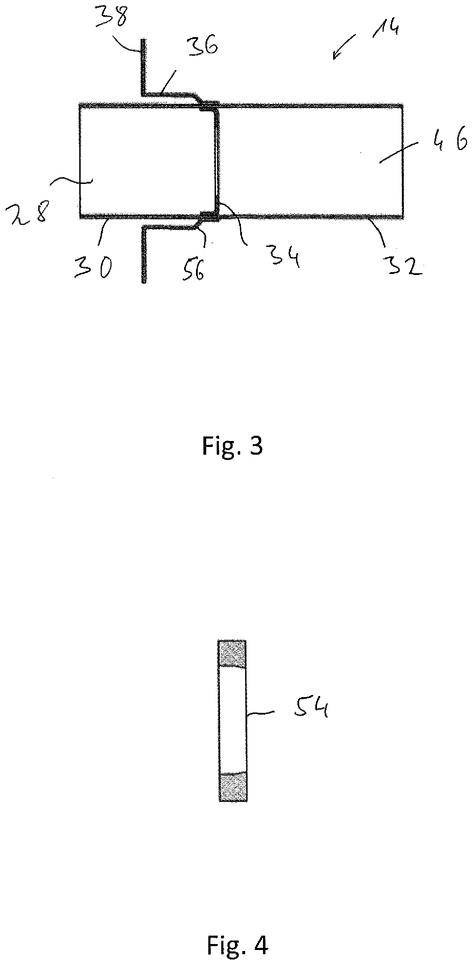

In Fig. 1 ist eine Brennkammerbaugruppe für ein brennstoffbetriebenes Fahrzeugheizgerät allgemein mit 10 bezeichnet. Die in Fig. 1 in Längsschnittansicht, geschnitten längs einer Längsmittenachse L der Brennkammerbaugruppe dargestellte Brennkammerbaugruppe 10 umfasst als wesentliche Bestandteile ein in Fig. 2 ebenfalls in Längsschnitt dargestelltes Gehäuse 12 sowie ein in Fig. 3 im Längsschnitt dargestelltes Brennkammergehäuse 14.

Das in Fig. 12 dargestellte Gehäuse 12 weist eine grundsätzlich topfartige Struktur mit einer Umfangswandung 16 und einer daran anschließenden Bodenwandung 18 auf. An dem von der Bodenwandung 18 entfernten axialen Endbereich der Umfangswandung 16 ist ein nach radial außen bezüglich der Längsmittenachse L greifender, ringartiger Befestigungsflansch 20 an der Umfangswandung 16 vorgesehen. An der einem Innenraum 22 des Gehäuses 12 zugewandten Seite stehen von der Umfangswandung 16 sich beispielsweise im Wesentlichen in Richtung der Längsmittenachse L erstreckende Wärmeübertragungsrippen 24 vor. Diese erstrecken sich ausgehend von der Bodenwandung 18 bis nahe an denjenigen axialen Endbereich der Umfangswandung 16, an welchem der Befestigungsflansch 20 nach radial außen hervorsteht. Hiervon können auch im Bereich der Bodenwandung 18 beispielsweise die Wärmeübertragungsrippen 24 fortsetzende Wärmeübertragungsrippen 26 vorgesehen sein.

Das insbesondere auch aus Gründen der thermischen Stabilität aus Metallmaterial, beispielsweise Aluminium, aufgebaute Gehäuse 12 kann einen Teil einer Wärmetauscheranordnung bilden, die beispielsweise ein weiteres das Gehäuse 12 umgebendes topfartiges Gehäuse aufweisen kann, so dass zwischen dem Gehäuse 12 und diesem weiteren Gehäuse ein Strömungsraum für ein zu erwärmendes, flüssiges Wärmeträgermedium gebildet ist. Alternativ kann das Gehäuse 12 an seiner Außenseite beispielsweise von der zu erwärmenden und in einen Fahrzeuginnenraum einzuleitenden Luft umströmt werden.

Das in Fig. 3 dargestellte Brennkammergehäuse 14 stellt einerseits eine eine Brennkammer 28 radial außen umgrenzende Umfangswandung 30 sowie ein an die Umfangswandung 30 anschließendes, im dargestellten Beispiel mit dieser integral ausgebildetes Flammrohr 32 bereit. Im Übergang von der Brennkammer 28 bzw. Umfangswandung 30 zum Flammrohr 32 ist eine Flammblende 34 vorgesehen. Näherungsweise im Bereich der Anbindung der Flammblende 34 an die Umfangswandung 30 bzw. das Flammrohr 32 ist an der Außenseite ein Brennkammergehäuseträger 36 vorgesehen, welcher einen nach radial außen greifenden Befestigungsflanschbereich 38 bereitstellt.

Nicht dargestellt ist in Fig. 3 eine an dem vom Flammrohr 32 entfernten axialen Endbereich der Umfangswandung 30 vorzusehende Bodenbaugruppe, welche die Brennkammer 28 axial abschließt. An einer derartigen Bodenbaugruppe kann beispielsweise ein poröses Verdampfermedium vorgesehen sein, in welches flüssiger Brennstoff eingespeist wird und aus welchem der flüssige Brennstoff in Dampfform in die Brennkammer 28 austreten kann. Einem derartigen porösen Verdampfermedium kann eine elektrisch erregbare Heizung zugeordnet sein, um insbesondere in der Startphase des Verbrennungsbetriebs die Brennstoffabdampfung zu unterstützen. Ferner kann beispielsweise ebenfalls die über nicht dargestellte Bodenbaugruppe bzw. Bodenwandung bzw. einen daran vorgesehenen Lufteinleitstutzen die zur Verbrennung mit dem Brennstoffdampf zu mischende Verbrennungsluft eingeleitet werden. Alternativ oder zusätzlich kann diese Verbrennungsluft über in der Umfangswandung 30 vorgesehene Lufteintrittsöffnungen in die Brennkammer 28 einströmen.

Die Umfangswandung 30 bzw. das damit beispielsweise integral ausgebildete Flammrohr 32, die Flammblende 34 und der Brennkammergehäuseträger 36 können beispielsweise aus Blechmaterial aufgebaut sein.

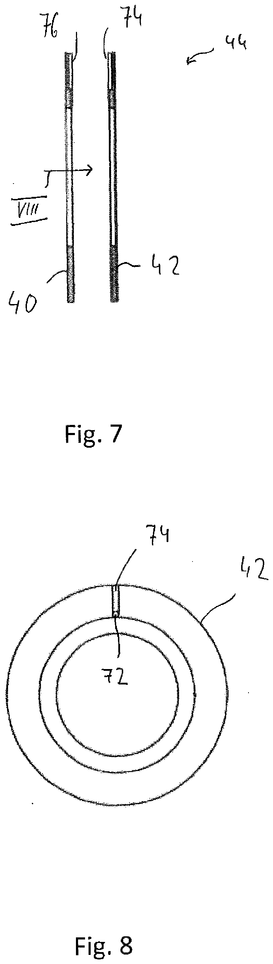

Die Fig. 1 zeigt, dass im Zusammenbauzustand das Brennkammergehäuse 14 in das Gehäuse 12 eingesetzt ist, so dass die beiden nach radial außen greifenden Befestigungsflanschbereiche 20, 38 axial nebeneinander liegen. Mit nicht dargestellten und die Befestigungsflanschbereiche 20, 38 durchsetzenden Schraubbolzen oder dergleichen, kann die Brennkammerbaugruppe 10 an ein beispielsweise auch den zur Brennkammer 28 führenden Luftströmungsraum begrenzendes Gehäuse angebunden werden. Um im Angrenzungsbereich des Brennkammergehäuseträgers 36 an das Gehäuse 12, also im Bereich der nebeneinander liegenden Befestigungsflanschbereiche 20, 38, einen gegen den Austritt von Abgas dichten Abschluss zu erreichen, ist eine in den Fig. 7 und 8 detaillierter dargestellte und mit zwei ringartig ausgebildeten Dichtscheiben 40, 42 aufgebaute Dichtanordnung 44 zwischen den beiden Befestigungsflanschbereichen 20, 38 angeordnet.

Die Dichtscheiben 40, 42 sind vorzugsweise aus flexiblem, also verformbarem und wärmebeständigem Material aufgebaut, so dass durch entsprechende Krafteinleitung über die vorangehend bereits angesprochenen Schraubbolzen die Dichtscheiben 40, 42, einen dichten Abschluss herstellend, zwischen den beiden Befestigungsflanschbereichen 20, 38 eingespannt werden können.

Die Fig. 1 veranschaulicht, dass im Inneren des Flammrohrs 32 ein in Richtung zur Bodenwandung 18 des Gehäuses 12 offener Abgasströmungsraum 46 gebildet ist. Die bei der Verbrennung in der Brennkammer 28 entstehenden Verbrennungsabgase strömen entlang des Abgasströmungsraums 46 auf die Bodenwandung 18 zu und werden dort beim Austritt aus dem Flammrohr 32 nach radial außen umgelenkt. Die Verbrennungsabgase treten dann in einen ersten axialen Endbereich 48 eines allgemein mit 50 bezeichneten und zwischen der Außenseite des Flammrohrs 32 und der Umfangswandung 16 des Gehäuses 12 gebildeten Abgasrückströmungsraum ein. Die Abgase strömen dabei entlang der Wärmeübertragungsrippen 24 durch den Abgasrückströmungsraum 50 und übertragen durch den Kontakt mit den Wärmeübertragungsrippen 24 und der Innenoberfläche der Umfangswandung 16 Wärme auf das Gehäuse 10.

Die im Abgasrückströmungsraum 50 entlang der Wärmeübertragungsrippen 24 strömenden Verbrennungsabgase strömen in Richtung auf einen zweiten axialen Endbereich 52 des Abgasrückströmungsraums 50 zu. In diesem zweiten axialen Endbereich 52 enden die Wärmeübertragungsrippen 24 und ist im Abgasrückströmungsraum 50 eine allgemein mit 54 bezeichnete Katalysatoranordnung vorgesehen. Die z. B. allgemein als Oxidationskatalysator ausgebildete Katalysatoranordnung 54 kann mit einem ringartigen, grundsätzlich von Abgas durchströmbaren Träger aufgebaut sein, an dessen Oberfläche eine katalytisch wirksame Beschichtung vorgesehen sein. Beispielsweise kann dieser Träger porös oder mit wabenartiger Struktur ausgebildet sein, um eine große katalytisch wirksame Oberfläche bereitstellen zu können. Die in Fig. 4 auch erkennbare Katalysatoranordnung 54 weist eine an die ringartige Querschnittsgeometrie des Abgasrückströmungsraums 50 angepasste ringartige Struktur auf, so dass sie im Wesentlichen ohne radiales Bewegungsspiel zwischen dem Flammrohr 32 bzw. der Umfangswandung 30 des Brennkammergehäuses 14 und der Umfangswandung 16 des Gehäuses 10 positioniert werden kann. In Richtung von dem ersten axialen Endbereich 48 des Abgasrückströmungsraums 50 weg kann die Katalysatoranordnung 54 an einem radialen Erweiterungsbereich 56 des Brennkammergehäuseträgers 36 axial abgestützt und somit in definierter Positionierung gehalten sein. In Richtung auf den ersten axialen Endbereich 48 zu kann die Katalysatoranordnung 54 durch die von der Umfangswandung 16 nach innen vorstehenden Wärmeübertragungsrippen 24 axial gestützt und somit in definierter Positionierung gehalten werden.

Zur Erlangung dieser Abstützwechselwirkung kann zwischen der ringartigen Katalysatoranordnung 54 und den Wärmeübertragungsrippen 24 ein ebenfalls ringartig geformter Heizbereich 58 einer allgemein mit 60 bezeichneten elektrisch erregbaren Heizeinrichtung angeordnet sein. Die Heizeinrichtung 60 kann beispielsweise mit einem Heizleiter 62 aufgebaut sein, wobei der Heizleiter 62 vorzugsweise als Mantel-Heizleiter ausgebildet sein kann. Bei einem derartigen Mantel-Heizleiter ist ein im Inneren desselben verlaufendes, thermisch wirksames Heizelement von einem ebenfalls elektrisch leitenden Mantel umgeben, so dass der Mantel einen Leitungsbereich des Heizleiters bildet. Um nach außen hin einen elektrischen Kurzschluss zu vermeiden, kann dieser Mantel an seiner Außenseite und selbstverständlich auch bezüglich des Heizelements nach innen mit elektrisch isolierendem Material überzogen sein.

Der Heizleiter 36 kann in Anpassung an die ringartige Struktur der Katalysatoranordnung 54 bzw. des Abgasrückströmungsraums 50 in eine kreisartige Konfiguration gebogen sein, so dass ein Endbereich 64 des Heizleiters 62 die ringartige Struktur schließt. In diesem Bereich kann der Heizleiter mit einem zunächst radial nach außen, dann axial und dann weiter nach radial außen sich erstreckenden Anschlussabschnitt aus dem Bereich des Abgasrückströmungsraums 50 herausgeführt sein.

Um eine definierte Positionierung insbesondere des ringartigen Heizbereichs 58 vorzusehen, sind in den axialen Endbereichen der Wärmeübertragungsrippen 24 axial offene und den Heizbereich 58 nicht vollständig aufnehmende Positioniereinsenkungen 66 vorgesehen. Bei in den Positioniereinsenkungen 66 aufgenommenem Heizbereich 58 steht dieser axial über die Wärmeübertragungsrippen 24 hervor, so dass ein direkter Wärmeübertragungskontakt zwischen dem Heizbereich 58 und der über diesen an den Wärmeübertragungsrippen 24 abgestützten Katalysatoranordnung 54 besteht. Im Bereich der in Fig. 2 oben dargestellten Wärmeübertragungsrippe 24 ist die Positionieraussparung 66 nach radial außen bis an die Umfangswandung 16 hinaus verlängert, um in diesem Bereich den nach radial außen sich erstreckenden Abschnitt 68 des Heizleiters 62 aufzunehmen. Für die Durchführung des dann anschließenden und im Wesentlichen axial sich erstreckenden Abschnitts 70 des Heizleiters 62 kann in diesem Umfangsbereich die Katalysatoranordnung 54 eine entsprechende, diese axial durchsetzende Aussparung aufweisen.

Die Fig. 7 und 8 zeigen in Verbindung mit der Fig. 1, dass die Dichtanordnung 44 so beschaffen ist, dass der Heizleiter 62 durch diese hindurch nach außen geführt werden kann. Zu diesem Zwecke weist die unmittelbar an den Befestigungsflanschbereich 20 anschließende und somit den Abgasrückströmungsraum 50 axial direkt abschließende Dichtscheibe 42 eine Durchtrittsöffnung 72 für den im Wesentlichen axial sich erstreckenden Abschnitt 70 des Heizleiters 62 auf. Von der Durchtrittsöffnung 72 erstreckt eine axial offene Aussparung 74 sich nach radial außen, welcher eine entsprechende, axial und nach radial außen offene Aussparung 76 der anderen Dichtscheibe 40 axial gegenüberliegt. Somit ist der Heizleiter 62 mit seinem radial sich erstreckenden und an den axial sich erstreckenden Abschnitt 70 anschließenden Abschnitt 78 zwischen den beiden Dichtscheiben 40, 42 in den jeweiligen Aussparungen 74, 76 derselben gehalten bzw. aufgenommen. Aufgrund der Flexibilität der Dichtscheiben 40, 42 und der bei der Befestigung des Gehäuses 12 zusammen mit dem Brennkammergehäuseträger 36 durch die bereits angesprochenen Schraubbolzen werden die beiden Dichtscheiben 40, 42 so verformt, dass sie auch den diese durchsetzenden Bereich des Heizleiters 62 gasdicht umschließen. Durch die dabei insbesondere auch axial auf das Gehäuse 12 ausgeübte Kraft wird dieses unter Verformung der Dichtanordnung 44 auf den Brennkammergehäuseträger 36 zu bewegt, wodurch die Möglichkeit geschaffen ist, die Katalysatoranordnung 54 zwischen dem radialen Erweiterungsbereich 56 des Brennkammergehäuseträgers 36 und den Wärmeübertragungsrippen 24 des Gehäuses 12 bzw. dem daran sich axial abstützenden Heizbereich 58 der Heizeinrichtung 60 in definierter Positionierung zu klemmen.

Durch das Vorsehen der Heizeinrichtung in Zuordnung zur Katalysatoranordnung 54 wird die Möglichkeit geschaffen, in bzw. vor der Startphase des Verbrennungsbetriebs durch Erregung der Heizeinrichtung 60 die Katalysatoranordnung 54 vorzuwärmen, so dass diese bereits bei Beginn der Verbrennung eine über einer Anspringtemperatur liegende Temperatur aufweist und auch in der Startphase des Verbrennungsbetriebs gewährleistet ist, dass insbesondere durch Verringerung des CO-Gehalts und des HC-Gehalts in den Abgasen ein geringer Schadstoffausstoß erreicht werden kann. Da bei der erfindungsgemäßen Ausgestaltung durch den Heizbereich 58 der Heizeinrichtung nicht nur die Katalysatoranordnung 54, sondern auch die diese stützenden axialen Endbereiche der Wärmeübertragungsrippen 24 vorgewärmt werden können, wird am Beginn des Verbrennungsbetriebs durch das den Abgasrückströmungsraum 50 durchströmende Abgas in den Wärmeübertragungsrippen 24 gespeicherte Wärme auf die Katalysatoranordnung 24 zu getragen und somit weiter effizient zur Erwärmung der Katalysatoranordnung 54 genutzt.

Es ist abschließend darauf hinzuweisen, dass, abweichend von der dargestellten Ausgestaltung, unter Beibehalt der Prinzipien der vorliegenden Erfindung konstruktive Änderungen vorgesehen werden können. So kann beispielsweise der Heizbereich 58 der Heizeinrichtung 60 eine von einer exakt kreisrunden Geometrie abweichende Struktur aufweisen. Beispielsweise kann der Heizbereich 62 mit mehreren, spiralartig sich erstreckenden Windungen aufgebaut sein oder kann mit einer wellenartigen oder einer zickzackartigen Struktur sich um die Längsmittenachse herum erstrecken. Auch ein mäanderartiger Verlauf in Umfangsrichtung oder/und in Radialrichtung ist denkbar.

Ferner könnte die Katalysatoranordnung 54 bei entsprechend kürzerer Ausgestaltung der Wärmeübertragungsrippen 24 näher an den ersten axialen Endbereich 58 des Abgasrückströmungsraums 50 heranrücken, so dass beispielsweise die Katalysatoranordnung 54 näherungsweise in einem Längenmittenbereich des Abgasrückströmungsraums 50 positioniert sein könnte. Grundsätzlich könnten auch mehrere derartige katalytisch wirksame Anordnungen in Strömungsrichtung aufeinanderfolgend vorgesehen sein, wobei dann beispielsweise einer oder mehreren dieser Katalysatoranordnungen eine derartige Heizeinrichtung zugeordnet sein kann. Auch können andere Komponenten, wie beispielsweise ein Kohlenwasserstoffspeicher beispielsweise stromaufwärts bezüglich der Katalysatoranordnung im Abgasrückströmungsraum vorgesehen sein.

## Patentansprüche

1. Brennkammerbaugruppe für ein brennstoffbetriebenes Fahrzeugheizgerät, umfassend ein Brennkammergehäuse (14) mit einer durch eine Umfangswandung (30) begrenzten Brennkammer (28) und einem in Richtung einer Gehäuselängsachse (L) auf die Umfangswandung (30) folgenden und einen in Richtung der Gehäuselängsachse (L) offenen Abgasströmungsraum (46) umgebenden Flammrohr (32), wobei zwischen dem Flammrohr (32) und einem dieses umgebenden Gehäuse (12) ein Abgasrückströmungsraum (50) gebildet ist, wobei an dem Gehäuse (12) in den Abgasrückströmungsraum (50) vorstehende Wärmeübertragungsrippen (24) vorgesehen sind und in einem ersten axialen Endbereich (48) des Abgasrückströmungsraums (50) der Abgasströmungsraum (46) zum Abgasrückströmungsraum (50) offen ist, **dadurch gekennzeichnet,**
- **dass** im Abgasrückströmungsraum (50) eine von im Abgasrückströmungsraum (50) strömenden Verbrennungsabgasen durchströmbare Katalysatoranordnung (54) vorgesehen ist,
- **dass** die Katalysatoranordnung (54) die Gehäuselängsachse (L) ringartig umgebend ausgebildet ist und im Abgasrückströmungsraum (50) auf die Wärmeübertragungsrippen (24) folgend angeordnet ist,
- **dass** eine Heizeinrichtung (60) zum Erwärmen der Katalysatoranordnung (54) vorgesehen ist, wobei die Heizeinrichtung (60) einen die Gehäuselängsachse (L) ringartig umgebenden Heizbereich (58) aufweist, und
- **dass** der Heizbereich (58) zwischen der Katalysatoranordnung (54) und den Wärmeübertragungsrippen (24) angeordnet ist und in Wärmeübertragungskontakt mit der Katalysatoranordnung (54) und den Wärmeübertragungsrippen (24) steht.

2. Brennkammerbaugruppe nach Anspruch 1, **dadurch gekennzeichnet, dass** die Heizeinrichtung (60) wenigstens bereichsweise in Wärmeübertragungskontakt mit der Katalysatoranordnung (54) steht.

3. Brennkammerbaugruppe nach einem der vorangehenden Ansprüche, **dadurch gekennzeichnet, dass** die Katalysatoranordnung (54) in einem zweiten axialen Endbereich (52) des Abgasrückströmungsraums (50) angeordnet ist.

4. Brennkammerbaugruppe nach einem der vorangehenden Ansprüche, **dadurch gekennzeichnet, dass** die Katalysatoranordnung (54) in Richtung auf den ersten axialen Endbereich (48) des Abgasrückströmungsraums (50) zu bezüglich der Wärmeübertragungsrippen (24) axial abgestützt ist.

5. Brennkammerbaugruppe nach einem der vorangehenden Ansprüche, **dadurch gekennzeichnet, dass** die Katalysatoranordnung (54) in Richtung von dem ersten axialen Endbereich (48) weg bezüglich eines Brennkammergehäuseträgers (36) axial abgestützt ist.

6. Brennkammerbaugruppe nach einem der vorangehenden Ansprüche, **dadurch gekennzeichnet, dass** eine den Abgasrückströmungsraum (50) gasdicht abschließende Dichtanordnung (44) vorgesehen ist, und dass die Dichtanordnung (44) eine Durchführungsaussparung (72, 74, 76) für die Heizeinrichtung (60) aufweist.

7. Brennkammerbaugruppe nach Anspruch 5 und Anspruch 6, **dadurch gekennzeichnet, dass** die Dichtanordnung (44) zwischen dem Brennkammergehäuseträger (36) und dem Gehäuse (12) angeordnet ist.

8. Brennkammerbaugruppe nach einem der vorangehenden Ansprüche, **dadurch gekennzeichnet, dass** die Heizeinrichtung (60) einen elektrisch erregbaren Heizleiter (62) umfasst.

9. Brennkammerbaugruppe nach Anspruch 8 **dadurch gekennzeichnet, dass** der Heizleiter (62) ein Mantel-Heizleiter ist.

10. Fahrzeugheizgerät, umfassend einen Brennkammerbaugruppe (10) nach einem der vorangehenden Ansprüche.

## Claims

1. A combustion chamber module for a fuel-operated vehicle heating device, comprising a combustion chamber housing (14) having a combustion chamber (28) defined by a circumferential wall (30) and a flame tube (32) that follows the circumferential wall (30) in the direction of a housing longitudinal axis (L) and encloses a waste gas flow space (46) that is open in the direction of the housing longitudinal axis (L), wherein a waste gas backflow space (50) is formed between the flame tube (32) and a housing (12) enclosing the latter, wherein heat transfer fins (24) are provided on the housing (12) projecting into the waste gas backflow space (50) and wherein the waste gas flow space (46) is open towards the waste gas backflow space (50) in a first axial end region (48) of the waste gas backflow space (50),
**characterized**
- **in that** a catalytic converter arrangement (54) through which combustion waste gases flowing in the waste gas backflow space (50) may flow is provided in the waste gas backflow space (50),
- **in that** the catalytic converter arrangement (54) is embodied annularly surrounding the housing longitudinal axis (L), and is arranged in the waste gas backflow space (50) following the heat transfer fins (24),
- **in that** a heating device (60) is provided for heating the catalytic converter arrangement (54), wherein the heating device (60) has a heating region (58) annularly surrounding the housing longitudinal axis (L), and
- **in that** the heating region (58) is arranged between the catalytic converter arrangement (54) and the heat transfer fins (24) and is in heat transfer contact with the catalytic converter arrangement (54) and the heat transfer fins (24).

2. The combustion chamber module according to claim 1, **characterized in that** the heating device (60) is in heat-transfer contact, at least in regions, with the catalytic converter arrangement (54).

3. The combustion chamber module according to any of the preceding claims, **characterized in that** the catalytic converter arrangement (54) is arranged in a second axial end region (52) of the waste gas backflow space (50).

4. The combustion chamber module according to any of the preceding claims, **characterized in that** the catalytic converter arrangement (54) is axially supported in the direction of the first axial end region (48) of the waste gas backflow space (50) relative to the heat transfer fins (24).

5. The combustion chamber module according to any of the preceding claims, **characterized in that** the catalytic converter arrangement (54) is axially supported in the direction away from the first axial end region (48) with respect to a combustion chamber housing support (36).

6. The combustion chamber module according to any of the preceding claims, **characterized in that** a sealing arrangement (44) sealing the waste gas backflow space (50) gas-tight is provided, and **in that** the sealing arrangement (44) has a through recess (72, 74, 76) for the heating device (60).

7. The combustion chamber module according to claim 5 and claim 6, **characterized in that** the sealing arrangement (44) is arranged between the combustion chamber housing support (36) and the housing (12).

8. The combustion chamber module according to any of the preceding claims, **characterized in that** the heating device (60) comprises an electrically excitable heat conductor (62).

9. The combustion chamber module according to claim 8, **characterized in that** the heat conductor (62) is a jacket heat conductor.

10. A vehicle heating device comprising a combustion chamber module (10) according to any of the preceding claims.

## Revendications

1. Module de chambre de combustion pour un dispositif de chauffage de véhicule opéré par du carburant, comprenant un boîtier de chambre de combustion (14) ayant une chambre de combustion (28) définie par une paroi circonférentielle (30) et un tube à flamme (32) qui suit la paroi circonférentielle (30) dans la direction d'un axe longitudinal du boîtier (L) et entoure un espace d'écoulement de gaz d'échappement (46) qui est ouvert dans la direction de l'axe longitudinal du boîtier (L), dans lequel un espace de reflux de gaz d'échappement (50) est formé entre le tube à flamme (32) et un boîtier (12) entourant celui-ci, dans lequel des ailettes de transfert de chaleur (24) sont prévues sur le boîtier (12) faisant saillie dans l'espace de reflux de gaz d'échappement (50) et dans lequel l'espace d'écoulement de gaz d'échappement (46) est ouvert vers l'espace de reflux de gaz d'échappement (50) dans une première région d'extrémité axiale (48) de l'espace de reflux de gaz d'échappement (50),
**caractérisé**
- **en ce qu'**un agencement de catalyseur (54) à travers lequel les gaz résiduels de combustion s'écoulant dans l'espace de reflux de gaz d'échappement (50) peuvent s'écouler est prévu dans l'espace de reflux de gaz résiduels,
- **en ce que** l'agencement de catalyseur (54) entourant de manière annulaire l'axe longitudinal du boîtier (L) et est disposé dans l'espace de reflux de gaz d'échappement (50) à la suite des ailettes de transfert de chaleur (24),
- **en ce qu'**un dispositif de chauffage (60) est prévu pour chauffer l'agencement de catalyseur (54), le dispositif de chauffage (60) présentant une zone de chauffage (58) entourant de manière annulaire l'axe longitudinal du boîtier (L), et
- **en ce que** la zone de chauffage (58) est disposée entre l'agencement de catalyseur (54) et les ailettes de transfert de chaleur (24) et est en contact de transfert de chaleur avec l'agencement de catalyseur (54) et les ailettes de transfert de chaleur (24).

2. Module de chambre de combustion selon la revendication 1, **caractérisé en ce que** le dispositif de chauffage (60) est en contact de transfert de chaleur, au moins par zones, avec l'agencement de catalyseur (54).

3. Module de chambre de combustion selon l'une des revendications précédentes, **caractérisé en ce que** l'agencement de catalyseur (54) est disposé dans une deuxième région d'extrémité axiale (52) de l'espace de reflux de gaz d'échappement (50).

4. Module de chambre de combustion selon l'une des revendications précédentes, **caractérisé en ce que** l'agencement de catalyseur (54) est supporté axialement dans la direction de la première région d'extrémité axiale (48) de l'espace de reflux de gaz d'échappement (50) par rapport aux ailettes de transfert de chaleur (24).

5. Module de chambre de combustion selon l'une des revendications précédentes, **caractérisé en ce que** l'agencement de catalyseur (54) est supporté axialement dans la direction opposée à la première région d'extrémité axiale (48) par rapport à un support de boîtier de chambre de combustion (36).

6. Module de chambre de combustion selon l'une des revendications précédentes, **caractérisé en ce qu'**il est prévu un dispositif d'étanchéité (44) fermant de manière étanche aux gaz l'espace de reflux de gaz d'échappement (50), et **en ce que** le dispositif d'étanchéité (44) présente un évidement traversant (72, 74, 76) pour le dispositif de chauffage (60).

7. Module de chambre de combustion selon la revendication 5 et la revendication 6, **caractérisé en ce que** le dispositif d'étanchéité (44) est disposé entre le support de boîtier de chambre de combustion (36) et le boîtier (12).

8. Module de chambre de combustion selon l'une des revendications précédentes, **caractérisé en ce que** le dispositif de chauffage (60) comprend un conducteur thermique (62) excitable électriquement.

9. Module de chambre de combustion selon la revendication 8, **caractérisé en ce que** le conducteur thermique (62) est un conducteur thermique à enveloppe.

10. Dispositif de chauffage de véhicule comprenant un module de chambre de combustion (10) selon l'une des revendications précédentes.
